# EUROPEAN PATENT APPLICATION

(11) **EP 4 383 886 A1**
(43) Date of publication of application: **12.06.2024**
(21) Application number: 21952807.2
(22) Date of filing: 05.08.2021
(51) Int. Cl.: H04W 72/04, H04W 76/40

(54) **TERMINAL AND WIRELESS COMMUNICATION METHOD**

(71) Applicant: NTT DOCOMO, INC., Tokyo 100-6150 (JP)
(72) Inventor: MATSUMURA, Yuki, Tokyo 100-6150 (JP); YOSHIOKA, Shohei, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2021/029181
(87) International publication number: WO 2023/012982

(57) **Abstract**

A terminal receives downlink control information, and in data distribution for a plurality of terminals, assumes resource blocks of a downlink data channel based on the lowest resource block for the data distribution when the downlink control information is a specific format.

## Description

### TECHNICAL FIELD

The present disclosure relates to a terminal and a radio communication method that support a multicast/broadcast service.

### BACKGROUND ART

The 3rd Generation Partnership Project (3GPP) has prepared a specification for the 5th generation mobile communication system (which may be called 5G, New Radio (NR), or Next Generation (NG)), and is also in the process of specifying the next generation called Beyond 5G, 5G Evolution, or 6G.

In 3GPP Release-17, simultaneous data transmission (also called distribution) services (which is called MBS: Multicast and Broadcast Services (tentative name)) with respect to multiple specified or unspecified terminals (User Equipment, UE) in NR has been targeted (NON-PATENT LITERATURE 1).

In MBS, it is agreed that DCI format 1_0 and DCI format 1_1 should be used as formats for Downlink Control Information (DCI) (NON-PATENT LITERATURE 2).

In MBS, it is also agreed that a plurality of UEs for which the same identification information (a group-common RNTI (Radio Network Temporary Identifier), which may be referred to as a G-RNTI) is configured assume a downlink data channel (PDSCH: Physical Downlink Shared Channel, which may be referred to as a Multicast PDSCH) for MBS using a common frequency resource (CFR) (NON-PATENT LITERATURE 3).

### CITATION LIST

### NON-PATENT LITERATURE

NON-PATENT LITERATURE 1: "New Work Item on NR support of Multicast and Broadcast Services", RP-193248, 3GPP TSG RAN Meeting #86, 3GPP, December 2019
NON-PATENT LITERATURE 2: "Final Report of 3GPP TSG RAN WG1 #104-e v 1.0.0", R1-2102281, 3GPP TSG RAN WG1 Meeting #104bis-e, 3GPP, April 2021
NON-PATENT LITERATURE 3: "Final Report of 3GPP TSG RAN WG1 #104bis-e v 1.0.0", R1-2104151, 3GPP TSG RAN WG1 Meeting #105-e, 3GPP, May 2021

### SUMMARY OF THE INVENTION

In DCI format 1_0, the resource block (RB) numbering of a PDSCH scheduled in a common search space (CSS) is based on the lowest RB of the control resource sets (CORESET) that have received the DCI (see Chapter 5.1.2.2, 3GPP TS 38.214).

If the bandwidth (RB) of the CFR is wider than the bandwidth (RB) of the CORESET, all CFRs cannot be indicated, and there is a possibility that some CFRs (RBs) cannot be allocated.

Therefore, the following disclosure has been made in view of such circumstances, and an object of the present disclosure is to provide a terminal and a radio communication method that can more reliably schedule Multicast PDSCH even when specific DCI such as a DCI format 1_0 is used.

An aspect of the present disclosure is a terminal (UE 200) including: a reception unit (control signal/reference signal processing unit 240) that receives downlink control information; and a control unit (control unit 270) that, in data distribution for a plurality of terminals, assumes resource blocks of a downlink data channel based on a lowest resource block for the data distribution when the downlink control information is a specific format.

An aspect of the present disclosure is a terminal (UE 200) including: a reception unit (control signal/reference signal processing unit 240) that receives downlink control information; and a control unit (control unit 270) that, in data distribution for a plurality of terminals, assumes that a lowest resource block of control resource sets is equal to or less than a lowest resource block for the data distribution when the downlink control information is a specific format.

An aspect of the present disclosure is a terminal (UE 200) including: a reception unit (control signal/reference signal processing unit 240) that receives downlink control information; and a control unit (control unit 270) that, in data distribution for a plurality of terminals, assumes resource blocks of a downlink data channel based on a lowest resource block of control resource sets when the downlink control information is a specific format, in which the control unit, at least, assumes that the lowest resource block of the control resource sets is indicated by a negative value.

An aspect of the present disclosure is a terminal (UE 200) including: a reception unit (control signal/reference signal processing unit 240) that receives downlink control information; and a control unit (control unit 270) that, in data distribution for a plurality of terminals, assumes resource blocks of a downlink data channel based on a lowest resource block of control resource sets when the downlink control information is a specific format, in which the control unit assumes an indication of the resource blocks based on the control resource sets, in a range of a frequency resource for the data distribution or a specified bandwidth part.

An aspect of the present disclosure is a radio communication method including: a step of receiving downlink control information; and a step of, in data distribution for a plurality of terminals, assuming resource blocks of a downlink data channel based on a lowest resource block for the data distribution when the downlink control information is a specific format.

An aspect of the present disclosure is a radio communication method including: a step of receiving downlink control information; and a step of, in data distribution for a plurality of terminals, assuming a lowest resource block of control resource sets is equal to or less than a lowest resource block for the data distribution when the downlink control information is a specific format.

### BRIEF DESCRIPTION OF THE DRAWINGS

[FIG. 1] FIG. 1 is an overall schematic diagram of a radio communication system 10.
[FIG. 2] FIG. 2 is a diagram illustrating a configuration example of radio frames, subframes and slots used in the radio communication system 10.
[FIG. 3] FIG. 3 is a diagram illustrating a configuration example of PTM transmission scheme 1 and PTM transmission scheme 2.
[FIG. 4] FIG. 4 is a functional block diagram of a gNB 100 and UE 200.
[FIG. 5] FIG. 5 is a diagram illustrating an example sequence of a PDCCH, a PDSCH and HARQ feedback in MBS.
[FIG. 6] FIG. 6 is a diagram illustrating an example of a relationship between resource blocks of CORESET and resource blocks of CFR when DCI format 1_0 is used.
[FIG. 7] FIG. 7 is a diagram illustrating an example (part 1) of a relationship between resource blocks of CORESET and resource blocks of CFR according to operation example 1.
[FIG. 8] FIG. 8 is a diagram illustrating an example (part 2) of a relationship between resource blocks of CORESET and resource blocks of CFR according to the operation example 1.
[FIG. 9] FIG. 9 is a diagram illustrating an example (part 3) of a relationship between resource blocks of CORESET and resource blocks of CFR according to the operation example 1.
[FIG. 10] FIG. 10 is a diagram illustrating an example of a relationship between resource blocks of CORESET and resource blocks of CFR according to operation example 2.
[FIG. 11] FIG. 11 is a diagram illustrating an example of a relationship between resource blocks of CORESET and resource blocks of CFR according to operation example 3.
[FIG. 12] FIG. 12 is a diagram illustrating an example (part 1) of a relationship between resource blocks of CORESET and resource blocks of CFR according to operation example 4.
[FIG. 13] FIG. 13 is a diagram illustrating an example (part 2) of a relationship between resource blocks of CORESET and resource blocks of CFR according to the operation example 4.
[FIG. 14] FIG. 14 is a diagram illustrating an example of a hardware configuration of the gNB 100 and the UE 200.

### DESCRIPTION OF EMBODIMENTS

Embodiments will be described below with reference to the drawings. Note that the same or similar reference numerals have been attached to the same functions and configurations, and the descriptions thereof will be omitted as appropriate.

### (1) Overall schematic configuration of radio communication system

### (1.1) System configuration example

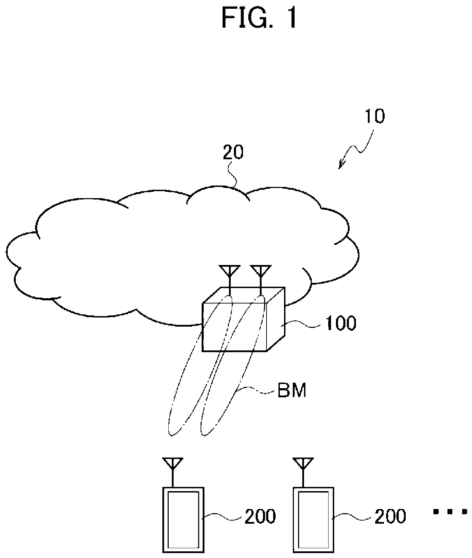

FIG. 1 is an overall schematic diagram of a radio communication system 10 according to the present embodiment. The radio communication system 10 is a radio communication system according to 5G New Radio (NR), and includes a Next Generation-Radio Access Network 20 (hereinafter, NG-RAN 20) and a plurality of terminals 200 (User Equipment 200, hereinafter, UE 200).

The radio communication system 10 may be a radio communication system according to a scheme called Beyond 5G, 5G Evolution, or 6G.

The NG-RAN 20 includes radio base stations 100 (gNB 100). The specific configuration of the radio communication system 10 including the number of gNBs and UEs is not limited to the example illustrated in FIG. 1.

The NG-RAN 20 actually includes a plurality of NG-RAN nodes, specifically gNBs (or ng-eNBs), and is connected to a core network (5GC, not illustrated) according to 5G. The NG-RAN 20 and 5GC may be referred to simply as a network.

The gNB 100 is a radio base station according to NR, and performs radio communication with the UE 200 according to NR. By controlling radio signals transmitted from a plurality of antenna elements, the gNB 100 and the UE 200 can support Massive MIMO that generates a more directional beam BM, carrier aggregation (CA) that uses a plurality of component carriers (CCs) bundled together, dual connectivity (DC) that simultaneously performs communication between the UE and each of NG-RAN nodes, and the like.

The radio communication system 10 supports FR1 and FR2. The frequency band of each FR (frequency range) is as follows:
- FR1: 410 MHz to 7.125 GHz
- FR2: 24.25 MHz to 52.6 GHz

In FR1, subcarrier spacing (SCS) of 15, 30 or 60 kHz may be used and a bandwidth (BW) of 5 to 100 MHz may be used. FR2 has a higher frequency than FR1, and SCS of 60 or 120 kHz (may include 240 kHz) may be used and a bandwidth (BW) of 50 to 400 MHz may be used.

In addition, the radio communication system 10 may support a higher frequency band than that of FR2. Specifically, the radio communication system 10 may support a frequency band that is greater than 52.6 GHz and up to 114.25 GHz. The radio communication system 10 may support a frequency band between FR1 and FR2. In addition, FR2 may include FR2-1 (24.25 to 52.6 GHz) and FR2-2 (52.6 to 71 GHz).

Further, Cyclic Prefix-Orthogonal Frequency Division Multiplexing (CP-OFDM)/Discrete Fourier Transform-Spread (DFT-S-OFDM) having greater subcarrier spacing (SCS) may be applied. Furthermore, DFT-S-OFDM may be applied not only to the uplink (UL), but also to the downlink (DL).

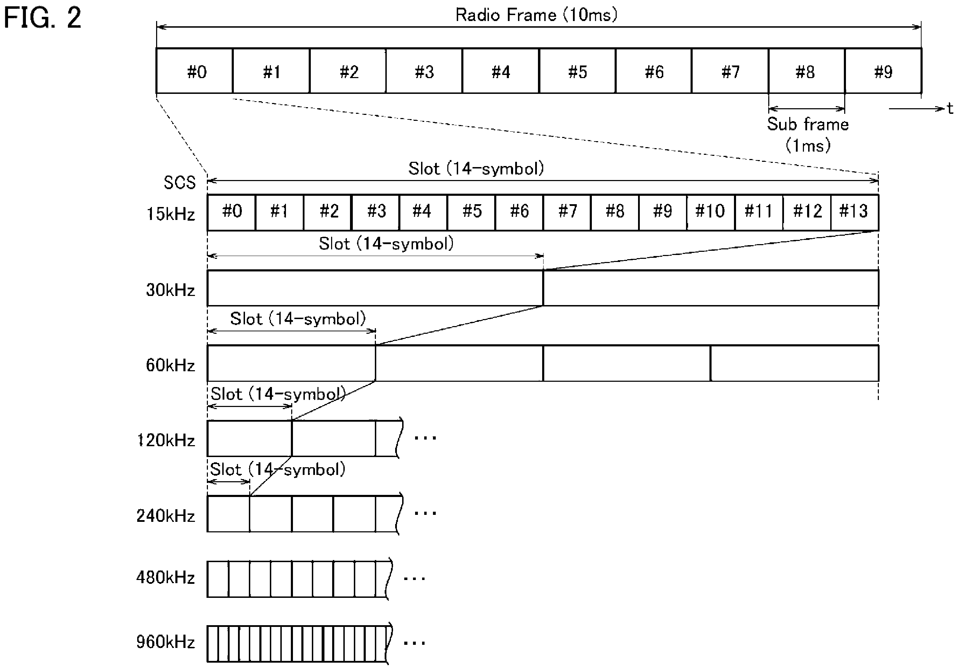

FIG. 2 illustrates a configuration example of radio frames, subframes and slots used in the radio communication system 10.

As illustrated in FIG. 2, one slot is constituted of 14 symbols, and, the symbol period (and slot period) becomes shorter as the SCS becomes larger (wider). Note that the number of symbols constituting one slot may not necessarily be 14 symbols (for example, 28 or 56 symbols). The number of slots for each subframe may vary depending on the SCS. In addition, the SCS may be wider than 240 kHz (for example, as illustrated in FIG. 2, 480 kHz, 960 kHz).

Note that the time direction (t) illustrated in FIG. 2 may be referred to as a time domain, a symbol period, symbol time, or the like. The frequency direction may be referred to as a frequency domain, a resource block, a resource block group, a subcarrier, a bandwidth part (BWP), a subchannel, a common frequency resource, or the like.

### (1.2) Provision of MBS

Multicast and Broadcast Services (MBS) may be provided in the radio communication system 10.

For example, in a stadium or hall, it is assumed that a large number of UEs 200 are located in a certain geographic area and a large number of UEs 200 simultaneously receive the same data. In such a case, the use of MBS rather than unicast is effective.

Unicast may be interpreted as communication performed one-to-one with the network by specifying a specific UE 200 (identification information specific to UE 200 may be specified).

Multicast may be interpreted as communication performed one-to-plural numbers (specified numbers) with the network by specifying a specific plurality of UEs 200 (identification information for multicast may be specified) . Note that the number of UEs 200 that receive the received multicast data may be one.

The broadcast may be interpreted as communication performed one-to-unspecified numbers with the network for all UEs 200. The data subjected to multicast/broadcast may have the same copied content, but some content, such as a header, may be different. Also, the data subjected to multicast/broadcast may be transmitted (distributed) simultaneously, but does not necessarily require strict concurrency, and may include propagation delays and/or processing delays in the RAN nodes, and the like.

In target UE 200, a radio resource control layer (RRC) may be in an idle state (RRC idle), a connected state (RRC connected), or any other state (for example, inactive state). The inactive state may be interpreted as a state in which some configuration of RRC are maintained.

In MBS, the following three methods are assumed for scheduling multicast/broadcast PDSCH (which may be called Physical Downlink Shared Channel, MBS PDSCH, Multicast PDSCH), specifically, scheduling of MBS packets (which may be read as meaning data). RRC connected UE may be read as meaning RRC idle UE or RRC inactive UE.

### • PTM transmission scheme 1 (PTM-1):

- A group-common PDSCH is scheduled using a group-common PDCCH (Physical Downlink Control Channel) for a MBS group of RRC connected UE.
- CRC of PDCCH and PDSCH are scrambled using a group-common radio network temporary identifier (which may be referred to as a G-RNTI).

### • PTM transmission scheme 2 (PTM-2):

- A group-common PDSCH is scheduled using a terminal specific (UE-specific) PDCCH for a MBS group of RRC connected UE.
- CRC of PDCCH is scrambled by a UE-specific RNTI.
- PDSCH is scrambled by a group-common RNTI.

### • PTP transmission scheme:

- A UE-specific PDSCH is scheduled using a UE-specific PDCCH for RRC connected UE.
- CRC of PDCCH and PDSCH are scrambled by a UE-specific RNTI. That is, MBS packets are transmitted by unicast.

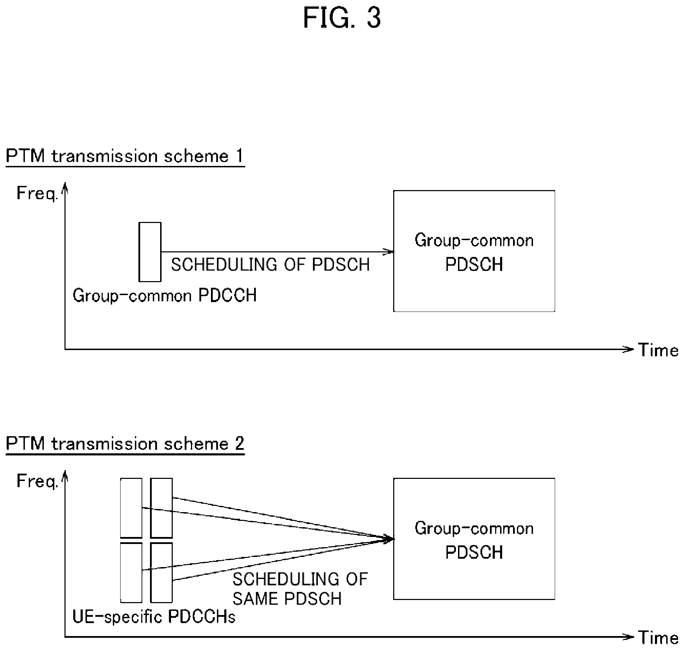

FIG. 3 illustrates a configuration example of the PTM transmission scheme 1 and the PTM transmission scheme 2. The UE-specific PDCCH/PDSCH may be identified by a target UE, but may not be identified by other UEs in the same MBS group. The group-common PDCCH/PDSCH is transmitted at the same time/frequency resource and can be identified by all UEs in the same MBS group. The names of the PTM transmission schemes 1 and 2 are tentative and may be called by different names as long as the operations described above are performed.

In point-to-point (PTP) distribution, the RAN node may wirelessly distribute individual copies of MBS data packets to individual UEs. In point-to-multipoint (PTM) distribution, the RAN node may wirelessly distribute a single copy of MBS data packets to a set of UEs.

In order to improve the MBS reliability, the following two feedback methods are assumed for HARQ (Hybrid Automatic repeat request) feedback, specifically, HARQ feedback for multicast/broadcast PDSCH.

### • Option 1: Feedback of both ACK and NACK (ACK/NACK feedback)

- UE that has successfully received or decoded a PDSCH transmits an ACK.
- UE that has failed to receive or decode a PDSCH transmits a NACK.
- PUCCH (Physical Uplink Control Channel) resource configuration: PUCCH-Config can be configured for multicast.
- PUCCH resource: shared/orthogonal between UEs depends on network configuration.
- HARQ-ACK CB (codebook): type-1 and type-2 (CB decision algorithm (specified in 3GPP TS 38.213)) are supported.
- Multiplexing: unicast or multicast can be applied

### • Option 2: NACK-only feedback.

- UE that has successfully received or decoded a PDSCH does not transmit an ACK (does not transmit a response).
- UE that has failed to receive or decode a PDSCH transmits a NACK.
- For given UE, PUCCH resource configuration can be configured separately by unicast or group cast (multicast).

Note that an ACK may be called a positive acknowledgement and a NACK may be called a negative acknowledgement. An HARQ may be called an automatic resend request.

Any of the following may be applied to enable/disable option 1 or option 2.

- RRC and Downlink Control Information (DCI)
- RRC only

In addition, the following content is assumed for semi-persistent scheduling (SPS) for multicast/broadcast PDSCH:
- A SPS group-common PDSCH (which may be called a group common SPS PDSCH) is adopted.
- Multiple SPS group-common PDSCHs can be configured as UE capabilities.
- HARQ feedback for SPS group-common PDSCH is possible.
- At least activation/deactivation via a group-common PDCCH (downlink control channel) is possible.

Note that deactivation may be read as meaning other synonymous terms such as release. For example, activation may be read as meaning boot, start, trigger, or the like, and deactivation may be read as meaning end, stop, or the like.

SPS is scheduling used as opposed to dynamic scheduling, and may be referred to as semi-fixed, semi-persistent, or semi-persistent scheduling, and may be interpreted as Configured Scheduling (CS).

Scheduling may be interpreted as the process of allocating resources for transmitting data. Dynamic scheduling may be interpreted as a mechanism by which all PDSCHs are scheduled by DCI (for example, DCI format 1_0, DCI format 1_1). SPS may be interpreted as a mechanism by which PDSCH transmissions are scheduled by signaling in a higher layer, such as RRC messages.

In addition, in MBS, a plurality of UEs configured with the same identity (G-RNTI) may assume a MBS PDSCH using a common frequency resource (CFR).

Note that Multicast SPS PDSCH reception may refer to group common SPS PDSCH reception, or may be SPS PDSCH reception performed by a plurality of terminals, or may be SPS PDSCH reception associated with a G-RNTI or a G-CS-RNTI (that is, a RNTI associated with a plurality of terminals). Multicast may also be read as meaning Broadcast.

For the physical layer, there may be scheduling categories having time domain scheduling and frequency domain scheduling.

Also, multicast, group cast, broadcast, and MBS may be interchangeably interpreted. Multicast PDSCH, and PDSCH that is scrambled by a group common RNTI may be interchangeably interpreted.

Further, the terms such as data and packet may be interchangeably interpreted, and may be interpreted as being synonymous with terms such as signal, data unit, or the like. In addition, transmission, reception, and distribution may be interchangeably interpreted.

### (2) Functional block configuration of radio communication system

Next, a functional block configuration of the radio communication system 10 will be described. Specifically, the functional block configuration of the gNB 100 and the UE 200 will be described.

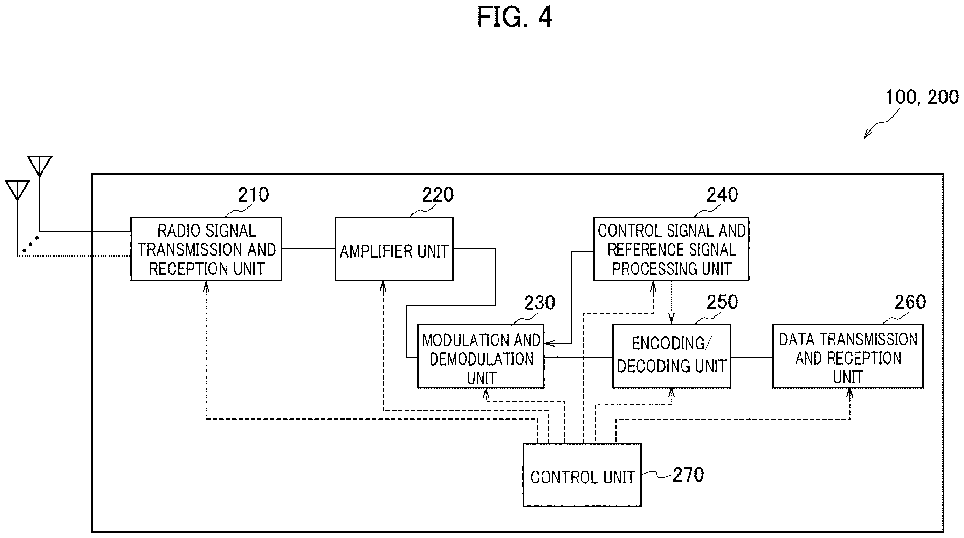

FIG. 4 is a functional block diagram of the gNB 100 and the UE 200. The UE 200 will be described below. As illustrated in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

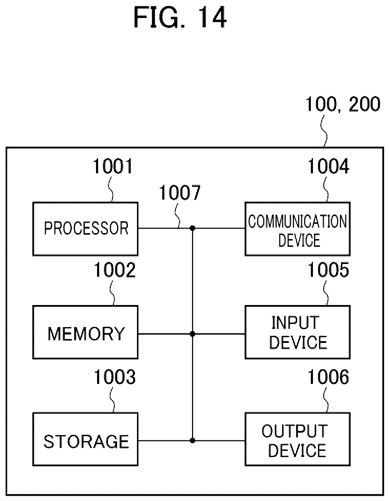

Note that in FIG. 4, only the main functional blocks regarding the description of the embodiment are illustrated, and the UE 200 includes other functional blocks (for example, a power supply unit). FIG. 4 also illustrates a functional block configuration of the UE 200 (gNB 100), and please refer to FIG. 14 for the hardware configuration.

The radio signal transmission and reception unit 210 transmits/receives a radio signal according to NR. The radio signal transmission and reception unit 210 supports Massive MIMO, CA that uses a plurality of CCs bundled together, and DC that simultaneously performs communication between the UE and each of two NG-RAN nodes.

The radio signal transmission and reception unit 210 supports an MBS, and can receive a downlink channel that is common to a group of terminals (group common) in data distribution for a plurality of UEs 200.

In addition, the radio signal transmission and reception unit 210 can receive an MBS, that is, a downlink data channel (PDSCH) in data distribution for a plurality of terminals.

Specifically, the radio signal transmission and reception unit 210 can receive a group-common PDSCH (which may include an SPS group-common PDSCH) which is a downlink data channel (PDSCH) common to a group of terminals.

Further, the radio signal transmission and reception unit 210 can receive a downlink control channel that is common to a group of terminals, specifically, a group-common PDCCH, and can receive a downlink control channel specific to a terminal, specifically, a UE-specific PDCCH.

The amplifier unit 220 is configured by a PA (Power Amplifier)/LNA (Low Noise Amplifier) and the like. The amplifier unit 220 amplifies a signal output from the modulation and demodulation unit 230 to a predetermined power level. The amplifier unit 220 also amplifies an RF signal output from the radio signal transmission and reception unit 210.

The modulation and demodulation unit 230 performs data modulation and demodulation, transmission power configuration, resource block allocation, and the like for each predetermined communication destination (gNB 100 or the like). Cyclic Prefix-Orthogonal Frequency Division Multiplexing (CP-OFDM)/Discrete Fourier Transform-Spread (DFT-S-OFDM) may be applied to the modulation and demodulation unit 230. In addition, DFT-S-OFDM may be used not only for an uplink (UL), but also for a downlink (DL).

The control signal and reference signal processing unit 240 performs processing regarding various control signals transmitted and received by the UE 200, and processing regarding various reference signals transmitted and received by the UE 200.

Specifically, the control signal and reference signal processing unit 240 receives various control signals transmitted from the gNB 100 via a predetermined control channel, for example, the control signals (messages) for the radio resource control layer (RRC). The control signal and reference signal processing unit 240 also transmits various control signals to the gNB 100 via a predetermined control channel.

The control signal and reference signal processing unit 240 performs processing using a reference signal (RS), such as a demodulation reference signal (DMRS) and a phase tracking reference signal (PTRS).

The DMRS is a known reference signal (pilot signal) between a terminal-specific base station and a terminal for estimating a fading channel used for data demodulation. The PTRS is a terminal-specific reference signal for estimating phase noise, which becomes a problem in a high frequency band.

In addition to the DMRS and PTRS, a reference signal may include a Channel State Information-Reference Signal (CSI-RS), a Sounding Reference Signal (SRS), a Positioning Reference Signal (PRS) for position information, and the like.

The channel includes a control channel and a data channel. The control channel may include a PDCCH, a PUCCH (Physical Uplink Control Channel), a RACH (Random Access Channel, Downlink Control Information (DCI) including a Random Access Radio Network Temporary Identifier (RA-RNTI)), a Physical Broadcast Channel (PBCH), and the like.

In addition, the data channel may include a PDSCH, a PUSCH (Physical Uplink Shared Channel), and the like. "Data" may refer to data transmitted via the data channel.

In the present embodiment, the control signal and reference signal processing unit 240 may constitute a reception unit that receives downlink control information (DCI). The DCI may cover all formats specified in 3GPP TS38.212; however, in the present embodiment, in particular, the control signal and reference signal processing unit 240 may receive DCI in accordance with DCI format 1_0 and DCI format 1_1. In MBS, DCI format 1_0 or DCI format 1_1 may be used.

DCI format 1_0 may be used for scheduling a PDSCH within a cell. DCI format 1_1 may also be used for scheduling a PDSCH within a cell. DCI format 1_0 may have fewer bits than DCI format 1_1 (and also than other DCI formats). The DCI format may include a frequency domain resource allocation (FDRA), a time domain resource allocation (TDRA), mapping from a virtual resource block (VRB) to a physical resource block (PRB) (VRB-PRB mapping), a modulation and coding scheme, and the like.

The encoding/decoding unit 250 performs data division/concatenation and channel encoding/decoding for each predetermined destination (gNB 100 or other gNBs).

Specifically, the encoding/decoding unit 250 divides the data output from the data transmission and reception unit 260 into pieces of a predetermined size, and performs channel encoding on the divided data. Further, the encoding /decoding unit 250 decodes the data output from the modulation and demodulation unit 230 and concatenates the decoded data.

The data transmission and reception unit 260 performs transmission and reception of a protocol data unit (PDU) and a service data unit (SDU). Specifically, the data transmission and reception unit 260 performs assembly/disassembly of the PDU/SDU in a plurality of layers (a media access control layer (MAC), a radio link control layer (RLC), a packet data convergence protocol layer (PDCP), or the like). The data transmission and reception unit 260 also performs error correction and retransmission control of the data, based on a hybrid automatic repeat request (ARQ). Specifically, the data transmission and reception unit 260 can transmit feedback of the hybrid automatic repeat request (HARQ).

The control unit 270 controls each functional block constituting the UE 200. In particular, in the present embodiment, the control unit 270 performs control on scheduling of a downlink channel regarding MBS, and HARQ feedback of the downlink channel.

The control unit 270 performs control corresponding to the scheduling of a downlink channel common to a group of terminals (group common) in data distribution for MBS, that is, for the plurality of UEs 200. Specifically, the control unit 270 can perform control corresponding to the scheduling of a group-common PDCCH and a group-common PDSCH.

In MBS, when the DCI is a specific format, the control unit 270 may assume resource blocks (RBs) of the downlink data channel based on the lowest resource block for MBS. For example, when the DCI format 1_0 is used in MBS, the control unit 270 may assume that the RB numbering of a PDSCH (MBS PDSCH) scheduled using DCI format 1_0 in common search space (CSS) is based on the lowest RB of a CFR. Note that the DCI format is not necessarily limited to DCI format 1_0, and may be DCI format 1_1, or the like (the same shall apply hereinafter).

The RB numbering may mean directly or indirectly indicating the RB number (which may be the RB index) to which a PDSCH is allocated. The RB number may be indicated by any number, such as 0 to x, and may correspond substantially to a subcarrier, or the like.

The downlink (DL) radio resources used for PDCCH transmission can be specified by CORESET (control resource sets). That is, the CORESET can be interpreted as a set of physical resources (specifically, a specific area on the DL resource grid) and parameters used for transmitting a PDCCH (including DCI).

The UE 200 can assume the specific area to which CORESET are allocated, based on the timing and period specified by CSS.

In MBS, when the DCI is a specific format, the control unit 270 may assume that the lowest resource block of CORESET is equal to or less than the lowest resource block for data distribution. For example, the control unit 270 may assume that the lowest RB of CORESET is equal to or less than the lowest RB of CFR when DCI format 1_0 is used in MBS and scheduling is performed using DCI format 1_0 in CSS.

More specifically, the control unit 270 may assume that "CORESET lowest RB ≤ CFR lowest RB" is satisfied when scheduling is performed using DCI format 1_0 in CSS. That is, the control unit 270 may assume that the number of CORESET lowest RB is always equal to or less than the CFR lowest RB.

Alternatively, in MBS, when the DCI is a specific format (for example, DCI format 1_0), the control unit 270 may assume RBs of MBS PDSCH based on the lowest resource block of CORESET (CORESET lowest RB). This operation is the same as the content specified in 3GPP TS38.214 such as Release-16. However, in this case, the control unit 270 may assume that at least the lowest resource block of CORESET (CORESET lowest RB) is indicated by a negative value. That is, some RB numbers of CORESET at the low-frequency side may be indicated by a negative value.

Further, in MBS, when the DCI is a specific format (for example, DCI format 1_0), the control unit 270 may assume RBs of MBS PDSCH based on the lowest resource block of CORESET (CORESET lowest RB); however, in the range of a frequency resource (CFR) for MBS or a specified bandwidth part (BWP), the control unit 270 may assume an indication of the resource blocks based on CORESET. The bandwidth of BWP (the number of RBs) may be wider than the bandwidth of CFR (the number of RBs).

Specifically, when the control unit 270 specifies the RB number based on the CORESET lowest RB and the RB number reaches one end of CFR in the frequency direction (which may be high-frequency side or low-frequency side), the RB number may move to the opposite end of the CFR, so that the RB numbers can be consecutive (may be called a mod operation).

Alternatively, when the control unit 270 specifies the RB number based on the CORESET lowest RB and the RB number reaches one end of BWP in the frequency direction (which may be high-frequency side or low-frequency side), the RB number may move to the opposite end of the BWP, so that the RB numbers can be consecutive (may be called a mod operation).

A specific example of the above mod operation will be described later.

### (3) Operation of radio communication system

Next, an operation of the radio communication system 10 will be described. Specifically, the operation regarding the scheduling of a downlink channel regarding MBS, and HARQ feedback of the downlink channel will be described.

### (3.1) Assumption and problem

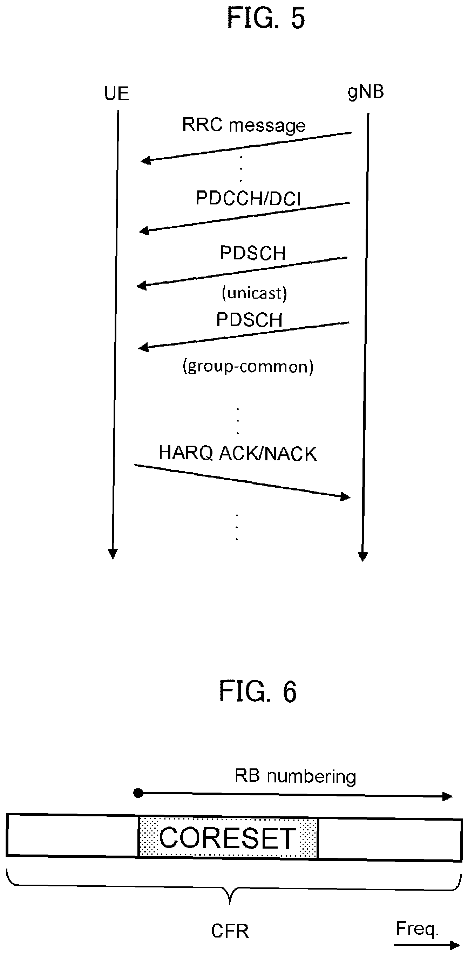

FIG. 5 illustrates an example sequence of a PDCCH, a PDSCH and HARQ feedback in MBS. As illustrated in FIG. 5, a PDCCH (which may include DCI) and a PDSCH may be transmitted by unicast or multicast (broadcast). The UE 200 may also transmit HARQ feedback (ACK/NACK) for (a transport block (TB) that is received via) the channel.

In FIG. 5, it appears that after one PDCCH/DCI, both unicast PDSCH and multicast PDSCH are transmitted; however, after one PDCCH/DCI, either unicast PDSCH or multicast PDSCH may be transmitted. That is, one PDCCH/DCI may schedule either one of unicast PDSCH and multicast PDSCH.

In 3GPP, the same RNTI (for example, a G-RNTI) may be configured for a plurality of UEs subject to MBS, and each UE may blind-decode the DCI based on the G-RNTI. As described above, it is agreed that at least DCI format 1_0 or DCI format 1_1 should be used in MBS. The DCI for MBS may include DCI format 1_2, which is DCI for a PDSCH, rather than DCI format 1_0 or DCI format 1_1. In addition, DCI format 1_0 may be the DCI with the smallest size among the pieces of DCI.

As described above, in MBS, a plurality of UEs configured with the same identification information (G-RNTI) may assume a common frequency resource (CFR) and use the CFR to indicate and control the resources of Multicast PDSCH (MBS PDSCH).

FIG. 6 illustrates an example of the relationship between resource blocks of CORESET and resource blocks of CFR when DCI format 1_0 is used.

The UE 200 may use downlink resource allocation type 1 when receiving scheduling permission (grant) in DCI format 1_0 (see Chapter 5.1.2.2, 3GPP TS 38.214).

For a PDSCH scheduled by DCI format 1_0 in any type of PDCCH common search space (CSS), the RB numbering may start from the lowest RB of CORESET that have received the DCI, regardless of which bandwidth part (BWP) is an active BWP or not, as illustrated in FIG. 6. Otherwise, the RB numbering may start from the lowest RB of the determined DL BWP.

For this reason, as illustrated in FIG. 6, when the CFR is larger than the CORESET (the bandwidth is wider), there is a possibility that some RBs cannot be allocated (cannot be indicated by the RB number).

Even in such a case, an operation example that enables appropriate configuration (scheduling) of Multicast PDSCH (MBS PDSCH) will be described below.

### (3.2) Operation example

An operation regarding the handling of RB numbers will be described below when using a specific format of DCI, specifically, DCI format 1_0 in MBS.

### (3.2.1) Operation Example 1

In this operation example, the UE 200 may assume that the RB number is determined based on the lowest RB of CFR. The lowest RB may be interpreted as a RB with the lowest frequency in a frequency band (for example, a frequency band of CFR) (the same shall apply hereinafter). A reference PRB index serving as a reference may be defined as "PRB index = 0", and PDSCH resources may be allocated (the same shall apply hereinafter).

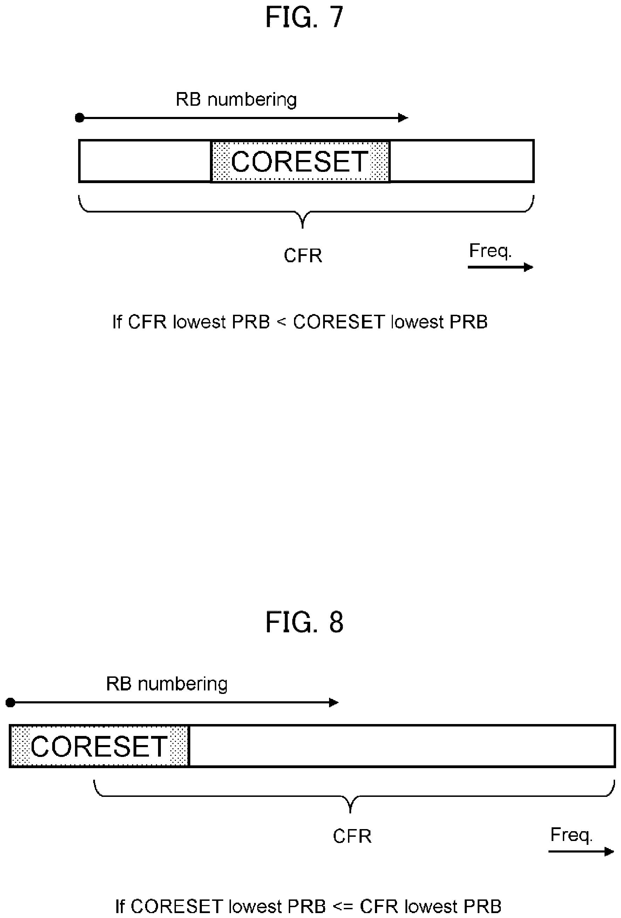

FIG. 7 illustrates an example (part 1) of the relationship between resource blocks of CORESET and resource blocks of CFR according to the operation example 1. As illustrated in FIG. 7, the RB numbering (RB number) of a PDSCH scheduled by DCI format 1_0 in the PDCCH common search space (CSS) may be based on the lowest RB of CFR.

The CFR may be configured by signaling in a higher layer (such as an RRC), or may be determined by the UE 200 using a predetermined method.

Note that the operation in which the RB numbering of a PDSCH is based on the CFR lowest RB may be limited to the case where an MBS PDSCH is configured (which may be rephrased as the case where a CFR is configured).

Alternatively, the operation in which the RB numbering of a PDSCH is based on the CFR lowest RB may be limited to the case where CRC (Cyclic Redundancy Checksum) is scrambled by a G-RNTI. Meanwhile, except for the case where CRC is scrambled by a G-RNTI, the RB numbering of a PDSCH may be based on the CORESET lowest RB (similar to Release-16, or the like).

In addition, the operation in which the RB numbering of a PDSCH is based on the CFR lowest RB may be limited to the case where "CFR lowest RB < CORESET lowest RB" is satisfied, that is, the case where the frequency of the CFR lowest RB is lower than the frequency of the CORESET lowest RB.

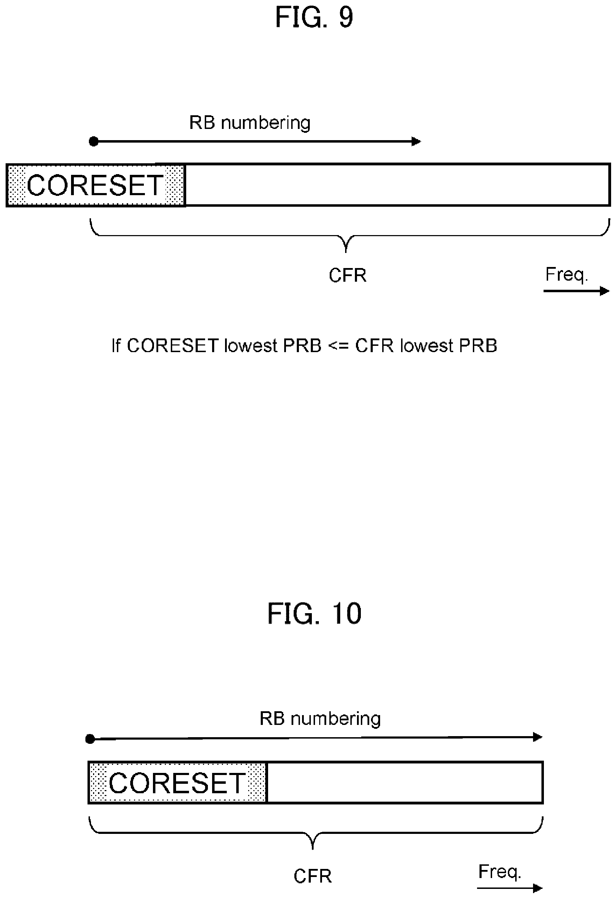

FIG. 8 illustrates an example (part 2) of the relationship between resource blocks of CORESET and resource blocks of CFR according to the operation example 1. FIG. 9 illustrates an example (part 3) of the relationship between resource blocks of CORESET and resource blocks of CFR according to the operation example 1.

As illustrated in FIG. 8, when "CORESET lowest RB ≤ CFR lowest RB" is satisfied, the RB numbering of a PDSCH may be based on the CORESET lowest RB (similar to Release-16, or the like).

As illustrated in FIG. 9, when "CORESET lowest RB ≤ CFR lowest RB" is satisfied, the RB numbering of a PDSCH may be based on the CFR lowest RB.

Whether the RB numbering of a PDSCH is based on the CORESET lowest RB or CFR lowest RB may be specified in advance by 3GPP specification, or may be configured by signaling in higher layers.

### (3.2.2) Operation example 2

In the present example, the UE 200 may assume that "CORESET lowest RB ≤ CFR lowest RB" is satisfied. FIG. 10 illustrates an example of the relationship between resource blocks of CORESET and resource blocks of CFR according to the operation example 2.

When the RB numbering of a PDSCH is scheduled by DCI format 1_0 in the PDCCH common search space (CSS), the UE 200 may always assume that "CORESET lowest RB ≤ CFR lowest RB" is satisfied, as illustrated in FIG. 10. That is, the RB numbering (RB number) of a PDSCH scheduled by DCI format 1_0 in the PDCCH common search space (CSS) may be assumed to satisfy "CORESET lowest PRB ≤ CFR lowest PRB".

Thus, the UE 200 does not have to assume the configuration of a CFR that does not satisfy "CORESET lowest PRB < CFR lowest PRB". Further, the above assumption may be limited to the case where an MBS PDSCH is configured (which may be rephrased as the case where a CFR is configured).

Alternatively, the above assumption may be limited to the case where CRC is scrambled by a G-RNTI. Meanwhile, the UE 200 may not make the above assumption except for the case where CRC is scrambled by a G-RNTI.

### (3.2.3) Operation example 3

In the present example, the UE 200 may assume RBs of MBS PDSCH based on the CORESET lowest RB, and in this case, the UE 200 may assume that the RB number (RB index) of the CORESET is indicated by a negative value.

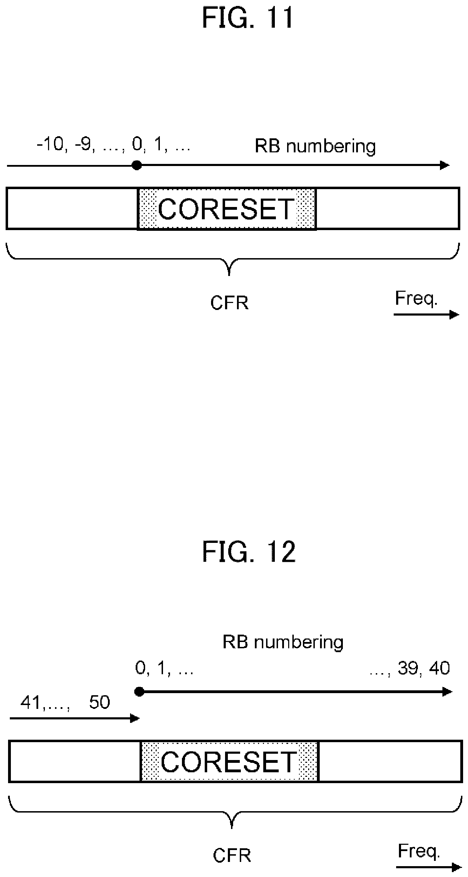

FIG. 11 illustrates an example of the relationship between resource blocks of CORESET and resource blocks of CFR according to the operation example 3.

When the RB numbering of a PDSCH is scheduled by DCI format 1_0 in the PDCCH common search space (CSS), as illustrated in FIG. 11, the UE 200 may assume that the RB numbering (RB number) of the PDSCH scheduled by DCI format 1_0 is based on the CORESET lowest RB (similar to Release-16, or the like); however, the RB number (RB index) may be configured as a negative value so as to indicate a CFR.

In the example illustrated in FIG. 11, the RB index of the CORESET lowest RB is 0, and the RBs of the CFR that are lower than the CORESET lowest RB are specified by a negative value (from -1 to -10).

In such a negative RB index, a negative value may be indicated as a PRB index by FDRA configured by an RRC. The maximum negative value may also be indicated as the CFR lowest RB.

The operation in which a negative value is applied to the RB number (RB index) of CORESET may be limited to the case where an MBS PDSCH is configured (which may be rephrased as the case where a CFR is configured).

Alternatively, the operation in which a negative value is applied to a RB index of CORESET may be limited to the case where CRC is scrambled by a G-RNTI. Meanwhile, except for the case where CRC is scrambled by a G-RNTI, the RB numbering (RB number) of a PDSCH may be based on the CORESET lowest RB (similar to Release-16, or the like), and a negative value may not be configured.

### (3.2.4) Operation example 4

In the present example, the UE 200 may assume RBs of MBS PDSCH based on the CORESET lowest RB, and in this case, the UE 200 may assume the RB number (RB index) based on the CORESET, in the range of the CFR or BWP.

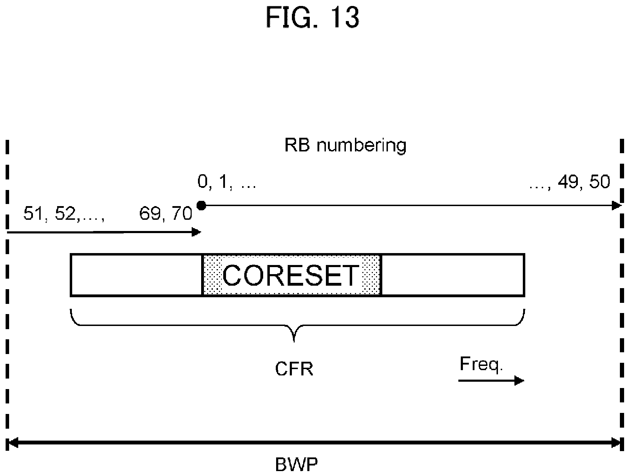

FIG. 12 illustrates an example (part 1) of the relationship between resource blocks of CORESET and resource blocks of CFR according to the operation example 4. FIG. 13 illustrates an example (part 2) of the relationship between resource blocks of CORESET and resource blocks of CFR according to the operation example 4.

As in the operation example 3, in the present operation example, when the RB numbering of a PDSCH is scheduled by DCI format 1_0 in the PDCCH common search space (CSS), the UE 200 may assume that the RB numbering (RB number) of the PDSCH scheduled by DCI format 1_0 is based on the CORESET lowest RB (similar to Release-16, or the like); however, in order to indicate a CFR, the RB number (RB index) may reach the end of the CFR or BWP (the right end in FIGS. 12 and 13) and then turn to the opposite side (the left end), so that the RB numbers can be consecutive (may be called a mod operation).

FIG. 12 illustrates an example in which the RB number has reached the right end of the CFR (RB index = 40) and then moved to the left end of the CFR, so that the RB numbers are consecutive (RB index = 41). From the CFR lowest RB (RB index = 41) to just before the CORESET lowest RB (RB index =50), the RB numbers are indicated by a negative value. The right end of the CFR may be interpreted as an end at the high-frequency side, and the left end of the CFR may be interpreted as an end at the low-frequency side.

FIG. 13 illustrates an example in which the RB number has reached the right end of the BWP (RB index = 50), and then moved to the left end of the BWP, so that the RB numbers are continue (RB index = 51). From the lowest RB of the BWP (RB index = 51) to just before the CORESET lowest RB (RB index = 70), the RB numbers are indicated by a negative value.

The operation in which a mod operation is applied to such RB numbers may be limited to the case where an MBS PDSCH is configured (which may be rephrased as the case where a CFR is configured).

Alternatively, the operation in which a mod operation is applied to such RB numbers may be limited to the case where CRC is scrambled by a G-RNTI. Meanwhile, except for the case where CRC is scrambled by a G-RNTI, the RB numbering (RB number) of a PDSCH is based on the CORESET lowest RB (similar to Release-16, or the like)

In addition, even when PRB indices are consecutive, PRB allocations are not consecutive in some cases. For this reason, the operation in which a mod operation is applied to such RB numbers may be limited to the case where a non-contiguous PRB allocation is applied.

### (3.2.5) Modification example

The above operation examples may be applied not only to the UE 200 in the RRC_CONNECTED state in MBS, but also to the UE 200 in other RRC states, specifically, to the UE 200 in the RRC_IDLE and/or RRC_INACTIVE state in MBS.

That is, the UE 200 may be in the RRC_IDLE state or RRC_INACTIVE state. "INACTIVE" may be interpreted as a state in which all RRC configurations are not released, but some configurations are maintained, as in RRC_IDLE.

When CORESETO is configured, the number of bits in the FDRA field of DCI format 1_0 transmitted in CSS may be determined based on the size of CORESETO as follows:
- 24 RBs: 9 bits
- 48 RBs: 11 bits
- 96 RBs: 13 bits

Note that CORESETO is special CORESET different from ordinary CORESET. Such specific CORESET may be interpreted as CORESET that transmit PDCCH for SIB (System Information Block) 1 scheduling.

Meanwhile, if CORESETO is not configured, the number of bits in the FDRA field of DCI format 1_0 may be determined based on the initial DL BWP size as follows:

### • 275 RBs: 16 bits

In PDSCH allocation granularity, a CFR size that can be covered by a 13-bit Resource Indication Value (RIV) without waste can be interpreted as up to 127 RBs. For this reason, if the CORESETO size is 96 RBs and the CFR is greater than 127 RBs, there is a possibility that some RBs cannot be allocated in allocation granularity of 1 RB.

Thus, at least one of the following steps may be taken.

- Increase the number of bits in the FDRA field
- Set RB allocation granularity by multiple RB units (or, increase the RB allocation granularity/unit)

### (4) Operation and effect

According to the above-described embodiment, the following operation and effect can be obtained. Specifically, in MBS, when the DCI is DCI format 1_0, the UE 200 may assume RBs of a PDSCH based on the CFR lowest RB.

In addition, in MBS, when the DCI is DCI format 1_0, the UE 200 may assume that "CORESET lowest RB ≤ CFR lowest RB" is satisfied.

Further, in MBS, when the DCI is DCI format 1_0, the UE 200 may assume that RBs of a MBS PDSCH is based on the CORESET lowest RB, and may assume that part of the CORESET lowest RBs is indicated by a negative value. Alternatively, in MBS, when the DCI is DCI format 1_0, the UE 200 may assume RBs of a MBS PDSCH based on the CORESET lowest RB, and may assume an indication of RBs based on the CORESET, in the range of CFR or BWP.

Accordingly, even if specific DCI having a small size like DCI format 1_0 is used, and the bandwidth (RB) of a CFR is wider than the bandwidth (RB) of CORESET, an appropriate CFR can be allocated, thereby making it possible to schedule a Multicast PDSCH (a MBS PDSCH) more reliably.

### (5) Other Embodiments

Although the embodiment has been described as above, the present disclosure is not limited to the description of the embodiment, and it is obvious to those skilled in the art that various modifications and improvements are possible.

For example, in the embodiment described above, the names PDCCH and PDSCH are used as downlink channels; however, different names may be used as long as they are downlink control channels or downlink data channels (which may be shared channels).

As described above, the target DCI format is not limited to DCI format 1_0, but may be any other DCI format (DCI format 1_1, DCI format 1_2, or the like).

In the above description, configure, activate, update, indicate, enable, specify, and select may be interchangeably interpreted. Similarly, link, associate, correspond, and map may be interchangeably interpreted, and allocate, assign, monitor, and map may also be interchangeably interpreted.

In addition, specific, dedicated, UE-specific, and UE-dedicated may be interchangeably interpreted. Similarly, common, shared, group-common, UE-common, and UE-shared may be interchangeably interpreted.

The block diagram (FIG. 4) used in the description of the above-described embodiment illustrates blocks in units of functions. Those functional blocks (components) can be realized by any combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work may be called a transmitting unit or a transmitter. For any of the above, as described above, the realization method is not particularly limited.

Further, the above-described gNB 100 and UE 200 (the device) may function as a computer that performs processing of a radio communication method of the present disclosure. FIG. 14 is a diagram illustrating an example of a hardware configuration of the device. As illustrated in FIG. 9, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (FIG. 4) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a central processing unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above may be executed by one processor 1001 or may be executed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The recording medium may be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI), higher layer signaling (for example, RRC signaling, Medium Access Control (MAC) signaling), broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information may be stored in a specific location (for example, a memory) or may be managed in a management table. The information to be input/output can be overwritten, updated, or added. The information may be deleted after outputting. The inputted information may be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present disclosure may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or any combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure may be represented by an absolute value, may be represented by a relative value from a predetermined value, or may be represented by corresponding other information. For example, a radio resource may be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)).

The term "cell" or "sector" refers to a part or all of the coverage area of at least one of a base station and a base station subsystem that performs a communication service in this coverage.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be read as meaning a mobile station (user terminal, hereinafter, the same). For example, each aspect/embodiment of the present disclosure may be applied to a configuration in which communication between a base station and a mobile station is replaced with communication between a plurality of mobile stations (which may be called Device-to-Device (D2D), Vehicle-to-Everything (V2X), or the like). In this case, the mobile station may have the function of a base station. In addition, words such as "uplink" and "downlink" may also be read as meaning words corresponding to inter-terminal communication (for example, "side"). For example, an uplink channel, a downlink channel, or the like may be read as meaning a side channel (or a sidelink).

Similarly, the mobile station in the present disclosure may be read as meaning a base station. In this case, the base station may have the function of the mobile station. A radio frame may be composed of one or more frames in the time domain. Each of the one or more frames in the time domain may be referred to as a subframe. A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1 to 13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-coded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as meaning a TTI having a time length exceeding 1 ms, and a short TTI (for example, shortened TTI) may be read as meaning a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a physical resource block (PRB), a subcarrier group (SCG), a resource element group (REG), a PRB pair, a RB pair, and the like.

A resource block may be configured by one or more resource elements (REs). For example, one RE may be a radio resource domain of one subcarrier and one symbol.

A bandwidth part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be configured in one carrier for the UE.

At least one of the configured BWPs may be active, and the UE does not have to expect to transmit and receive predetermined signals/channels outside the active BWP. Note that "cell", "carrier", and the like in this disclosure may be read as meaning "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the cyclic prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be read as meaning "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element has to precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as meaning "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

- 10:: radio communication system
- 20:: NG-RAN
- 100:: gNB
- 200:: UE
- 210:: radio signal transmission and reception unit
- 220:: amplifier unit
- 230:: modulation and demodulation unit
- 240:: control signal and reference signal processing unit
- 250:: encoding/decoding unit
- 260:: data transmission and reception unit
- 270:: control unit
- 1001:: processor
- 1002:: memory
- 1003:: storage
- 1004:: communication device
- 1005:: input device
- 1006:: output device
- 1007:: bus

## Claims

1. A terminal comprising:
a reception unit that receives downlink control information; and
a control unit that, in data distribution for a plurality of terminals, assumes resource blocks of a downlink data channel based on a lowest resource block for the data distribution when the downlink control information is a specific format.

2. A terminal comprising:
a reception unit that receives downlink control information; and
a control unit that, in data distribution for a plurality of terminals, assumes that a lowest resource block of control resource sets is equal to or less than a lowest resource block for the data distribution when the downlink control information is a specific format.

3. A terminal comprising:
a reception unit that receives downlink control information; and
a control unit that, in data distribution for a plurality of terminals, assumes resource blocks of a downlink data channel based on a lowest resource block of control resource sets when the downlink control information is a specific format, wherein
the control unit, at least, assumes that the lowest resource block of the control resource sets is indicated by a negative value.

4. A terminal comprising:
a reception unit that receives downlink control information; and
a control unit that, in data distribution for a plurality of terminals, assumes resource blocks of a downlink data channel based on a lowest resource block of control resource sets when the downlink control information is a specific format, wherein
the control unit assumes an indication of the resource blocks based on the control resource sets, in a range of a frequency resource for the data distribution or a specified bandwidth part.

5. A radio communication method comprising:
a step of receiving downlink control information; and
a step of, in data distribution for a plurality of terminals, assuming resource blocks of a downlink data channel based on a lowest resource block for the data distribution when the downlink control information is a specific format.

6. A radio communication method comprising:
a step of receiving downlink control information; and
a step of, in data distribution for a plurality of terminals, assuming a lowest resource block of control resource sets is equal to or less than a lowest resource block for the data distribution when the downlink control information is a specific format.
